# EUROPEAN PATENT APPLICATION

(11) **EP 2 849 509 A1**
(43) Date of publication of application: **18.03.2015**
(21) Application number: 13306259.6
(22) Date of filing: 16.09.2013
(51) Int. Cl.: H04W 72/04, H04W 36/32

(54) **Apparatuses, methods and computer programs for base station transceivers to communicate information related to suspended radio resources**

(71) Applicant: ALCATEL LUCENT, 92100 Boulogne-Billancourt (FR)
(72) Inventor: Doetsch, Uwe, 70435 Stuttgart (DE); Stanze, Oliver, 70435 Stuttgart (DE); Bakker, Hajo, 70435 Stuttgart (DE)
(74) Representative: 2SPL Patentanwälte PartG mbB

(57) **Abstract**

Embodiments relate to apparatuses, methods and computer programs for base station transceivers to communicate information related to suspended radio resources. An apparatus (10) for a first base station transceiver (100) is operable to provide information related to suspended radio resources to a second base station transceiver (200). The first base station transceiver apparatus (10) comprises an interface (12) operable to communicate with the second base station transceiver (200), and a transceiver module (14) operable to communicate with a mobile transceiver (400) using repetitive radio frames. A radio frame comprises a plurality of sub-frames and a sub-frame comprises a plurality of transmission symbols using time and frequency resources of a sub-frame. The apparatus (10) further comprises a control module (16), which is operable to control the interface (12) and the transceiver module (14). The control module (16) is further operable to determine a set of suspended radio resources to communicate with the mobile transceiver (400). The set of suspended radio resources comprises a subset of the time and frequency resources of a sub-frame. The control module (16) is further operable to provide information related to the set of suspended radio resources to the second base station transceiver (200) using the interface (12). A second base station transceiver apparatus (20) is operable to receive information related to the set of suspended radio resources from the first base station transceiver (100) using the interface (22) and to communicate with the mobile transceiver (400) using radio resources differing from the set of suspended radio resources.

## Description

### Technical Field

Embodiments relate to apparatuses, methods and computer programs for base station transceivers to communicate information related to suspended radio resources, and more particularly, but not exclusively, to resource management between base station transceivers in a wireless communication network.

### Background

This section introduces aspects that may be helpful in facilitating a better understanding of the invention(s). Accordingly, the statements of this section are to be read in this light and are not to be understood as admissions about what is in the prior art or what is not in the prior art.

Cellular wireless communication systems are based on a plurality of cellular coverage areas, which are generated by interconnected base station transceivers. Mobile transceivers consume wireless services provided by a network and may move through the cellular structure. Mobile transceivers carry out measurements on radio signals transmitted by the base station transceivers based on which the mobile transceivers are assigned to the cells of the network, handed over between the cells of the network, respectively. The size of a cell and the number of mobile transceivers which can be served may depend on the strength or quality of the respective radio signals. The capacity of each cell, in terms of data rate or number of mobile transceivers, which can be served, depends on system parameters and specifications, such as bandwidth, maximum or minimum data rates per mobile transceiver, etc. The traffic demand on the other side depends on the density of the mobile transceivers, e.g. in a downtown area the density of mobile transceivers may be higher than in a rural area. The traffic demand may also depend on other factors, such as business and rush hours, occurrence of events like mass events, characteristics of traffic demands, service mix, etc.

During changing traffic conditions it may be desirable for operators of cellular systems to control, rearrange, or shift capacity in their network, for example, by changing coverage areas of certain cells in the network. One concept uses modification of handover measurements, e.g. manipulating handover margins or parameters to change the handover behavior of mobile transceivers, for example, to affect handovers to a neighbor cell earlier or later. This may provide control of cell sizes to a certain extent. For changing a handover configuration at a mobile transceiver according signaling messages and protocols may be provided by the according specification of a cellular system.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide apparatuses, methods and computer programs for base station transceivers, e.g. small cell or macro cell base station transceivers, to carry out radio resource management. Embodiments may allow base station transceivers to exchange information related to suspended resources, such that a neighboring base station may coordinate resource utilization of mobile transceivers depending on the mobile transceiver's condition. For example, a mobile transceiver may not be handed over from an originating base station transceiver or cell to a neighbor cell or base station transceiver. Instead the neighbor base station transceiver may suspend some radio resources such that the mobile transceiver could still be served by the originating base station transceiver while being within the normal coverage of the neighbor base station. The suspension of the radio resources may improve the interference condition of the mobile transceiver in the coverage of the neighbor base station. Embodiments may allow a fine granularity of resource suspension, which may be below sub-frame level. Time or frequency resources of a sub-frame may be at least partly suspended and used by an originating base station transceiver to communicate with the mobile transceiver in the normal coverage of the neighbor base station transceiver.

Embodiments provide an apparatus for a first base station transceiver. The first base station apparatus is operable to provide information related to suspended radio resources to a second base station transceiver. The first base station transceiver apparatus comprises an interface, which is operable to communicate with the second base station transceiver. The first base station transceiver apparatus further comprises a transceiver module, which is operable to communicate with a mobile transceiver using repetitive radio frames. A radio frame comprises a plurality of sub-frames and a sub-frame comprises a plurality of transmission symbols using time and frequency resources of a sub-frame. The first base station transceiver apparatus further comprises a control module, which is operable to control the interface and the transceiver module. The control module is further operable to determine a set of suspended radio resources to communicate with the mobile transceiver. The set of suspended radio resources comprises a subset of the time and frequency resources of a sub-frame. The control module is further operable to provide information related to the set of suspended radio resources to the second base station transceiver using the interface.

Accordingly, embodiments provide an apparatus for a second base station transceiver. The second base station transceiver apparatus is operable to obtain information related to suspended radio resources from a first base station transceiver. The second base station transceiver apparatus comprises an interface, which is operable to communicate with the first base station transceiver. The second base station transceiver apparatus comprises a transceiver module, which is operable to communicate with a mobile transceiver using repetitive radio frames. A radio frame comprises a plurality of sub-frames and a sub-frame comprises a plurality of transmission symbols using time and frequency resources of a sub-frame. The second base station transceiver apparatus comprises a control module, which is operable to control the interface and the transceiver module. The control module is further operable to receive information related to the set of suspended radio resources from the first base station transceiver using the interface. The control module is further operable to communicate with the mobile transceiver using radio resources differing from the set of suspended radio resources. The set of suspended radio resources comprises a subset of the time and frequency resources of a sub-frame.

In embodiments, a first base station transceiver may inform a second base station transceiver on radio resources of a sub-frame, which are to be suspended, protected or not to be used. The first base station transceiver may thereby affect radio resources with an improved interference condition within the coverage of the second base station transceiver, as the second base station transceiver may avoid using these radio resources.

In some embodiments information related to the set of suspended radio resources corresponds to a request from the first base station transceiver to the second base station transceiver to suspend, suppress, or avoid the set of suspended radio resources. The first base station transceiver apparatus may then coordinate radio resources, at least partly, also for the second base station transceiver. In some embodiments more efficient radio resource utilization may result as the first base station transceiver may decide to suspend some of the radio resources at the second base station transceiver instead of handing a mobile transceiver over to the second base station transceiver. The first base station may evaluate a signaling overhead for handover against a resource suspension at the second base station transceiver.

In some embodiments the control module of the first base station transceiver apparatus may be further operable to receive information related to an acknowledgment or a rejection on a request to suspend radio resources from the second base station transceiver using the interface. The control module of the first base station transceiver apparatus may be operable to initiate a handover of the mobile transceiver to the second base station transceiver, when information on the rejection is received. The control module of the first base station transceiver apparatus may be operable to communicate with the mobile transceiver using the set of suspended radio sources and using the transceiver module, when information on the acknowledgment is received.

The control module of the second base station transceiver apparatus may be further operable to provide information related to an acknowledgment or a rejection on the request to the first base station transceiver using the interface. The control module of the second base station transceiver apparatus may be operable to determine a decision on the acknowledgement or the rejection based on a radio resource utilization or a load condition at the second base station transceiver. In some embodiments a requested suspension of the first base station transceiver could not disadvantageously affect a load situation of the second base station transceiver, as the second base station transceiver may accept or reject a request for resource suspension.

The control module of the first base station transceiver apparatus may, in some embodiments, be operable to receive information related to a handover request to the second base station transceiver from the mobile transceiver before provision of the information related to the set of suspended radio resources to the second base station transceiver. Additionally or alternatively, the control module of the first base station transceiver apparatus may be operable to receive information related to a measurement on the signals of the second base station transceiver from the mobile transceiver before provision of the information related to the set of suspended radio resources to the second base station transceiver. The information related to the measurement may indicate that a signal quality of the signals from the second base station transceiver received at the mobile transceiver fulfills a predefined criterion. The first base station transceiver apparatus may hence detect whether the mobile transceiver is in or near the coverage of the second base station transceiver using handover signaling or measurement reports from the mobile transceiver. Embodiments may enable efficient signaling by identifying a mobile transceiver in or close to the coverage of the second base station transceiver before initiating a radio resource suspension for the mobile transceiver.

In some embodiments the first base station transceiver may correspond to a macro cell base station transceiver and the second base station transceiver may correspond to a small cell base station transceiver with a coverage region, which is at least partly surrounded by a coverage region of the first base station transceiver. Embodiments may enable a macro cell base station transceiver to coordinate radio resource utilization by a small cell base station transceiver in its coverage. In other embodiments the second base station transceiver may correspond to a macro cell base station transceiver and the first base station transceiver may correspond to a small cell base station transceiver with a coverage region, which is at least partly surrounded by a coverage region of the second base station transceiver. Embodiments may enable a small cell base station transceiver to coordinate radio resource utilization of a macro cell base station transceiver with a coverage area, which is at least partly overlapping the coverage area of the small cell.

The control module of the first base station transceiver apparatus may be operable to determine information related to a velocity of the mobile transceiver based on the communication with the mobile transceiver in some embodiments. The control module may be operable to provide the information related to the set of suspended radio resources, if the information related to the velocity of the mobile transceiver indicates that the velocity of the mobile transceiver lies above a threshold. Embodiments may provide more efficient resource utilization by distinguishing fast and slow moving mobile transceivers and by avoiding handovers of fast moving mobile transceivers together with using resource suspension, when it can be expected that the mobile transceiver may only be in a coverage area of the second base station transceiver for a short amount of time.

Embodiments further provide a method for a first base station transceiver, which is operable to provide information related to suspended radio resources to a second base station transceiver. The method comprises determining a set of suspended radio resources to communicate with a mobile transceiver using repetitive radio frames. A radio frame comprises a plurality of sub-frames and a sub-frame comprises a plurality of transmission symbols using time and frequency resources of a sub-frame. The set of suspended radio resources comprises a subset of the time and frequency resources of a sub-frame. The method for a first base station transceiver further comprises providing information related to the set of suspended radio resources to the second base station transceiver.

Embodiments further provide a method for a second base station transceiver, which is operable to obtain information related to suspended radio resources from a first base station transceiver. The method comprises receiving information related to a set of suspended radio resources from the first base station transceiver. The method for a second base station transceiver further comprises communicating with the mobile transceiver using repetitive radio frames. A radio frame comprises a plurality of sub-frames and a sub-frame comprises a plurality of transmission symbols using time and frequency resources of a sub-frame. The communicating further uses radio resources differing from the set of suspended radio resources and the set of suspended radio resources comprises a subset of the time and frequency resources of a sub-frame.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates a block diagram of an embodiment of a first base station transceiver apparatus and a block diagram of an embodiment of a second base station transceiver apparatus;
Fig. 2 illustrates embodiments in a heterogeneous network scenario;
Fig. 3 illustrates receive signal levels of a moving mobile transceiver in a heterogeneous network scenario;
Fig. 4 depicts a message sequence chart for a handover of a mobile transceiver;
Fig. 5 shows a resource suspension on sub-frame level;
Fig. 6 depicts a message sequence chart between two base station transceivers in an embodiment;
Fig. 7 shows a resource suspension below sub-frame level in an embodiment;
Fig. 8 illustrates a block diagram of a flow chart of an embodiment of a method for a first base station transceiver; and
Fig. 9 illustrates a block diagram of a flow chart of an embodiment of a method for a second base station transceiver.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following embodiments of apparatuses, methods and computer programs will be described. The apparatuses, methods, or computer programs may be adapted to or configured for a mobile communication system, which may, for example, correspond to one of the 3GPP-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In mobile communication networks heterogeneous architectures may be used. Heterogeneous Networks (HetNets) are networks, which utilize cell types of different sizes, as, for example, macro cells and small cells, such as metro cells, micro or pico cells, and femto cells. Such cells are established by base station transceivers for which their coverage areas are determined by their transmission power and interference condition. Small cells are cells having a smaller coverage area than macro cells. In some network scenarios the small cells' coverage area can be at least partly surrounded by the coverage area of a macro cell. Small cells may be deployed to extend the capacity of a network.

A base station transceiver can be operable to communicate with one or more active mobile transceivers and a base station transceiver can be located in or adjacent to a coverage area of another base station transceiver, e.g. a macro cell base station transceiver or a Closed Subscriber Group (CSG) base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3 GPP termino lo gy.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB (eNB), a BTS, an access point, a remote radio head, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. CSG and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

Interference coordination between base station transceivers may make use of blank or Almost Blank Sub-frames (ABSs) (note that the term "ABS" is used, and should be understood to include both blank and almost blank sub-frames). Signaling may be utilized between the cells, e.g. across a corresponding backhaul interface, known in LTE as the "X2" interface. For LTE Rel-10, it has been agreed that this X2 signaling will take the form of a coordination bitmap to indicate the ABS pattern (for example with each bit corresponding to one sub-frame in a series of sub-frames, with the value of the bit indicating whether the sub-frame is an ABS or not). Such signaling may help the cell to schedule data transmissions in the small cell appropriately to avoid interference (e.g. by scheduling transmissions to UEs near the edge of the small cell during ABSs), and to signal to the UEs the sub-frames, which should have low macro cellular interference and should therefore be used for measurements. Examples for such measurements are measurements for Radio Resource Management (RRM), which typically relate to handover, measurements for Radio Link Monitoring (RLM), which typically relate to detection of serving radio link failure, and measurements for Channel State Information (CSI) or Channel Quality Information (CQI), which typically relate to link adaptation on the serving radio link. In a CSG scenario, the ABS frames of the CSG cell can be used for scheduling data transmissions from other cells with reduced interference from the CSG cell.

In such an example scenario, Radio Resource Control (RRC) signaling can be utilized to indicate to the UEs the set of sub-frames, which they should use for measurements (e.g., for RLM/RRM or CSI), where RRC is a signaling protocol standardized by 3GPP for control and configuration signaling. Within a HetNet scenario, e.g. a macro cell and a number of small/pico/metro cells within the footprint of the macro cell. The macro cell may optimize or control parameters for hand over and handover measurements, which may differ, for example, based on load variations during the timeframe of a day (e.g. peak hours).

The macro cell may define ABS. Based on the ABS setting the small cell may define a bias parameter, which may be part of a handover configuration and may be applied by all UEs. Updates of ABS and bias parameters may be signaled towards all UEs within the footprint of the macro cell, i.e. to all UEs associated to the macro and all UEs associated to the small cells within the footprint of the macro cell.

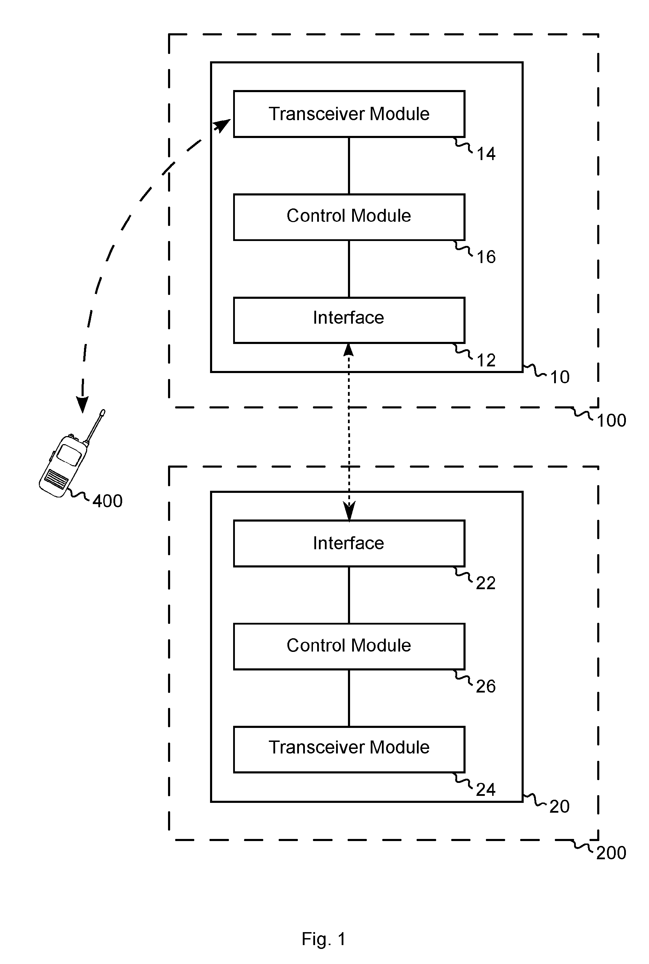

Fig. 1 illustrates a block diagram of an embodiment of a first base station transceiver apparatus 10. In other words, the apparatus 10 may be adapted to or operable in a first base station transceiver 100; it may be operated by or comprised in a first base station transceiver 100. Embodiments may also provide a first base station transceiver 100 comprising the apparatus 10. Fig. 1 further shows an embodiment (dashed lines) of a first base station transceiver 100 comprising the apparatus 10. Fig. 1 further illustrates a block diagram of a second base station transceiver apparatus 20. In other words, the apparatus 20 may be adapted to or operable in a second base station transceiver 200; it may be operated by or comprised in a second base station transceiver 200. Embodiments may also provide a second base station transceiver 200 comprising the apparatus 20. Fig. 1 further shows an embodiment (dashed lines) of a second base station transceiver 200 comprising the apparatus 20. The first base station transceiver apparatus 10 and the second base station transceiver apparatus 20 are operable in or configured for a communication network.

In Fig. 1 the apparatus 10 for the first base station transceiver 100 is operable to provide information related to suspended radio resources to the second base station transceiver 200. The first base station transceiver apparatus 10 comprises an interface 12, which is operable to communicate with the second base station transceiver 200. In some embodiments an interface of an entity may correspond to any interface adapted to the respective communication or access technology. Interfaces may use the same or different access technologies, protocols, media, etc. As an example, in an embodiment of an LTE network the interface 12 may correspond to an X2-interface.

The first base station transceiver apparatus 10 further comprises a transceiver module 14, which is operable to communicate with a mobile transceiver 400 using repetitive radio frames. In some embodiments a transceiver module may correspond to one or more transceiver devices, one or more transceiver units, or any means for transmitting or receiving. A transceiver module may therefore comprise typical transmitter or receiver components, such as one or more antennas, filter or filter circuitry, an amplifier such as a Low Noise Amplifier (LNA) or a Power Amplifier (PA), conversion circuitry for converting a Radio Frequency (RF) signal into a base band signal or vice versa, an analog/digital or digital/analog converter, or signal processing capability such as a Digital Signal Processor (DSP). In embodiments a radio frame comprises a plurality of sub-frames and a sub-frame comprises a plurality of transmission symbols using time and frequency resources of a sub-frame.

In Fig. 1 the first base station transceiver apparatus 10 further comprises a control module 16, which is operable to control the interface 12 and the transceiver module 14. The control module 16 is coupled to the interface 12 and the transceiver module 14. A control module may correspond to one or more control units, one or more control devices, or any means for controlling. In some embodiments a control module may be implemented in software, which is executable on accordingly adapted hardware, such as a processor, a DSP, a multipurpose processor, or the like. The control module 16 is further operable to determine a set of suspended radio resources to communicate with the mobile transceiver 400. The set of suspended radio resources comprises a subset of the time and frequency resources of a sub-frame. In embodiments the radio resources may correspond to any radio resources such as time slots, symbols, sub-carriers, Physical Resource Blocks (PRB) etc. The control module 16 is further operable to provide information related to the set of suspended radio resources to the second base station transceiver 200 using the interface 12.

Fig. 1 further illustrates an embodiment of the apparatus 20 for the second base station transceiver 200. The apparatus 20 is operable to obtain information related to suspended radio resources from a first base station transceiver 100. The second base station transceiver apparatus 20 comprises an interface 22 operable to communicate with the first base station transceiver 100. The apparatus 20 further comprises a transceiver module 24, which is operable to communicate with the mobile transceiver 400 using the repetitive radio frames. The apparatus 20 further comprises a control module 26, which is coupled to the interface 22 and the transceiver module 24. The control module 16 is operable to control the interface 22 and the transceiver module 24. With respect to possible implementations of the interface 22, the transceiver module 24, and the control module 26 it is referred to the above respective description of such components.

In Fig. 1 the control module 26 is further operable to receive information related to the set of suspended radio resources from the first base station transceiver 100 using the interface 22. The control module 26 is further operable to communicate with the mobile transceiver 400 using radio resources differing from the set of suspended radio resources. The set of suspended radio resources comprises a subset of the time and frequency resources of a sub-frame. The control module 16 may be operable to not use, suppress, or protect the radio resources of the set of suspended radio resources.

In some embodiments the first base station transceiver 100 may correspond to a macro cell base station transceiver and the second base station transceiver 200 may correspond to a small cell base station transceiver with a coverage region, which is at least partly surrounded by a coverage region of the first base station transceiver. In other embodiments it may be the other way around, the first base station transceiver 100 may correspond to a small cell base station transceiver and the second base station transceiver 200 may correspond to a macro cell base station transceiver with a coverage region, which at least partly surrounds a coverage region of the first base station transceiver. In further embodiments the first base station transceiver 100 may operate one or more cells of the same or different size as one or more cells operated by the second base station transceiver 200.

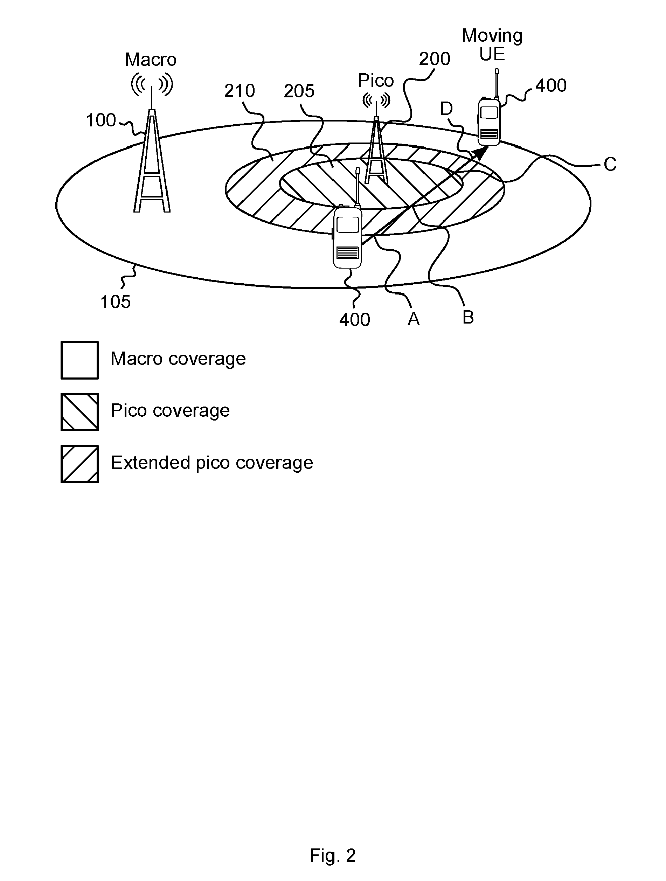

The placing of a small cell, e.g. pico cells, may enable to locally increase the capacity of wireless networks and thereby to cope with the increasing demand for wireless broadband traffic. To improve or even maximize the footprint and thereby the economic benefit of a small cell, range extension may often be applied. In general may be realized by a bias value, i.e. UEs are served by the pico cell, although the received signal level from a macro cell is up to the bias higher than a received signal level from a pico cell. So, the coverage area of a pico can be divided into a "normal" coverage area and an extended pico coverage area, which is illustrated by Fig. 2. Fig. 2 shows embodiments in a heterogeneous network scenario, where a coverage area 105 of a macro cell base station transceiver 100 (first base station transceiver 100) surrounds a coverage area 205/210 of a small cell base station transceiver 200 (second base station transceiver 200), which is exemplified as a pico cell in Fig. 2 and in the following Figs. The small cell 200 has a regular coverage 205 and an extended coverage area 210. A mobile transceiver 400 is assumed to move from the coverage 105 of the macro cell 100 through the coverage 205/210 of the small cell 200 back to the coverage 105 of the macro cell 100 along the arrow point from location A to location D, via locations B and C.

Since the cells or base stations in such networks may utilize the same frequency resources, such architectures may suffer from interference created by the overlapping coverage areas of these cells. Therefore enhanced Inter-Cell Interference Coordination (eICIC) for cochannel HetNet deployment is one of the techniques for LTE Release 10 (Rel-10). Cochannel HetNets may comprise macro cells and small cells operating on the same frequency channel. Such deployments present some specific interference scenarios for which eICIC techniques are utilized.

In an example scenario, the small cells are open to users of the macro cell. In order to ensure that such small cells carry a useful share of the total traffic load, User Equipment (UE) or mobile transceivers may be programmed or configured to associate preferentially with the small cells rather than the macro cells, for example, by biasing the Signal-to-Interference-and-Noise Ratio (SINR) or a Reference Signal Receive Power (RSRP) threshold at which they will select a small cell to associate with. Under such conditions, UEs near the edge of a small cell's coverage area may suffer strong interference from one or more macro cells. In order to alleviate such interference, some radio frames or sub-frames may be configured as "blank" or "almost blank" in a macro cell. A blank sub-frame may contain no transmission from the macro cell, while an "almost blank" sub-frame typically contains no payload data transmission and little or no control signaling transmission, but may contain reference signal transmissions in order to ensure backward compatibility with legacy terminals, which expect to find the reference signals for measurements but are unaware of the configuration of almost blank sub-frames.

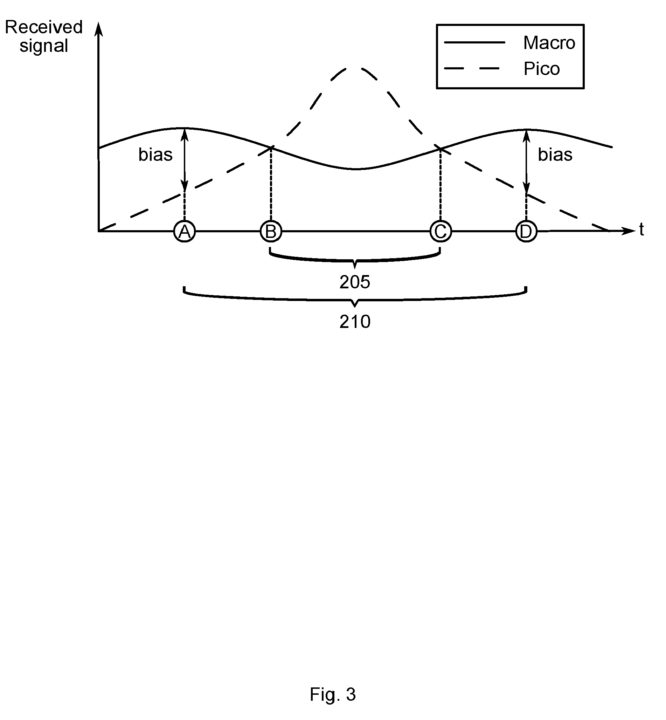

Coming back to the scenario illustrated in Fig. 2 a definition of "normal" coverage 205 and extended coverage 210 may mainly depend on the received signal at the UE 400 from macro cell 100 and the pico cell 200. This will be further detailed with the help of Fig. 3. Fig. 3 illustrates receive signal levels in a heterogeneous network scenario. The view graph of Fig. 3 shows the received signal level of the mobile transceiver of Fig. 2 as it moves through the coverage area 205/210 of the pico/small cell 200 along the positions A, B, C, and D. Fig. 3 shows the points in time at which the mobile transceiver is located at these positions A, B, C, and D. Fig. 3 illustrates the reception levels of the signal, as for example pilot or broadcast signals, of the macro cell 100 using a solid line, and reception levels of the small cell 200 using a dashed line. Moreover, a configured bias value is illustrated determining a difference between the normal coverage 205 of the small cell 200 between points B and C, at which the reception levels of the macro cell 100 and the small cell 200 are equal, and the extended coverage area 210 between positions A and D, at which the signal level of the small cell 200 differs from the signal level of the macro cell 100 by the bias value. As long as the received signal level of the pico/small cell 200 is higher than a received signal level of the macro cell 200, between B and C in Fig. 3, the UE 400 is located inside the "normal" coverage 205 of the pico/small cell 200. If the received signal of the macro cell 100 does not exceed the received signal of the pico/small cell 200 by at least the bias value, the UE 400 is located inside the extended pico cell coverage area 210, between A and B and between C and D in Fig. 3.

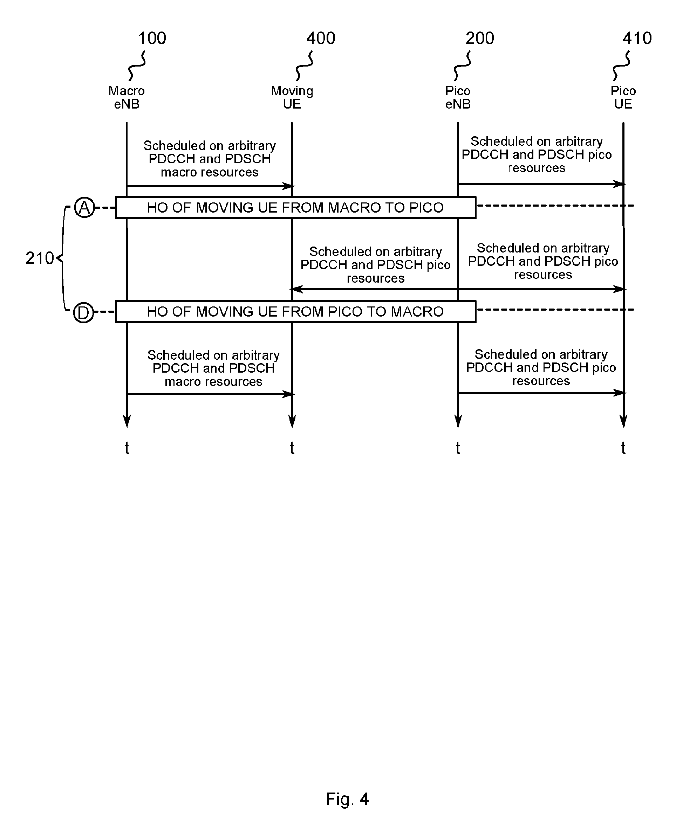

Fig. 4 depicts a message sequence for a handover of the mobile transceiver 400 in an LTE or LTE-A network. If a (fast) moving UE 400 crosses the (extended) pico/small cell coverage 210, the process shown in Fig. 4 may occur. Fig. 4 shows from the left to the right a macro eNB 100, a moving UE 400, which is initially served by the macro eNB 100, a pico eNB 200, which serves a pico UE 410. As shown in Fig. 4 first, the macro eNB 100 schedules the moving UE 400 on arbitrary macro cell radio resources and uses a Physical Downlink Control CHannel (PDCCH) and a Physical Downlink Shared CHannel (PDSCH). In parallel, the pico eNB 200 schedules the pico UE 410 on arbitrary pico cell radio resources using PDCCH and PDSCH. The message sequence of Fig. 4 refers to the scenario already described using Figs. 2 and 3. Once the UE 400 reaches position A it may perform a handover from the macro cell 100 to the pico cell 200. In the pico cell 200 the UE 400 and the pico UE 410 are scheduled on arbitrary pico cell radio resources using PDCCH and PDSCH. After a short time, which depends on the UE's 400 velocity and the cell sizes, the UE 400 may perform another handover back to the macro cell 100 at position D. The UE 400 may only shortly be scheduled in the pico cell 200 before it performs the further handover back to the macro cell 100.

Due to the relatively small coverage 210 of pico cells 200, the duration for which fast moving UEs 400 stay in a small cell 200 may be quite small. Because each handover may result in a high control overhead and a risk for failure, embodiments may avoid the handover of fast moving UEs 400 into a pico cell 200, but may enable the macro cell 100 to still serve them, even if the received signal from the pico cell 200 is higher than the received signal from the macro cell 100. Therefore embodiments may use protected or suspended radio resources, for example, radio resources with reduced pico cell 200 interference. Protected or suspended radio resources may be made available to the macro eNB 100, which may then schedule the fast moving UE 400 while it moves through the pico cell 200.

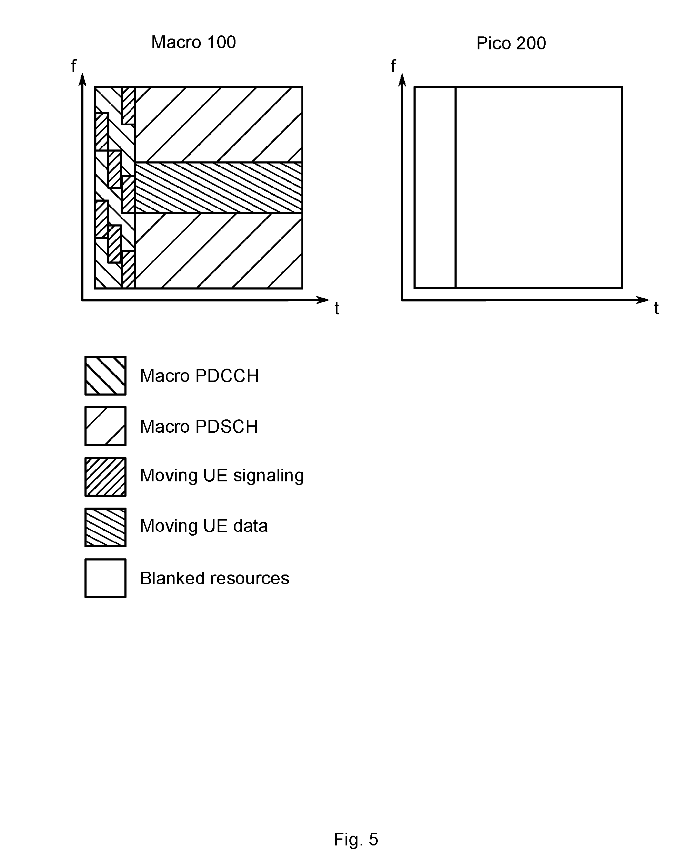

One concept to realize these protected resources may be based on the definition of an ABS pattern for the pico eNB 200. In this case the pico cell 200 would transmit on predefined sub-frames an ABS, e.g. it would completely blank the corresponding sub-frame. This may result in a significant reduced interference on all PDCCH and PDSCH resources for the fast moving UE, which is located in the extended pico coverage 210 or in the pico coverage 205. Therefore the moving UE 400 may be scheduled on arbitrary macro resources in these sub-frames. Such scenario is illustrated in Fig. 5. Fig. 5 shows a resource suspension on sub-frame level. Fig. 5 depicts two view charts one on the left for the macro cell 100 and one on the right for the pico cell 200. Each view chart shows a time-frequency resource plane for one sub-frame. As shown in Fig. 5 the macro cell 100 uses the first symbols in the sub-frame for PDCCH and signaling to the UE 400 and the later symbols in the sub-frame for PDSCH and data transmission to the UE 400. In the pico cell 200 no transmissions take place in this sub-frame as it is blanked. The concept of Fig. 5 may lack flexibility. For example, if the macro cell 100 serves a single moving UE 400 with a Voice over Internet Protocol (VoIP) connection. In this case the blanking of complete sub-frames for the single moving UE 400 may result in a high waste of pico cell resources.

Embodiments may avoid handovers from fast moving UEs 400 from a macro cell 100 to a pico cell 200. Embodiments may schedule moving UEs on protected macro cell resources, which correspond to suspended pico cell 200 resources. UE 400 may then be served by the macro cell 100 while being located in the pico coverage 210. These protected or suspended resources may be implemented via coordination between macro cell 100 and pico cell 200 and may be based on the blanking of certain PDSCH resources inside the pico cell. In some embodiments, frequency and time resource from a payload section in the sub-frame may be selected for the set of suspended resources, for example, a sub-frame may comprise a number of PRBs, some of are selected for the set of suspended resources and some are not. A protected control channel for the moving UE 400 may be implemented by using an enhanced PDCCH (ePDCCH), which may use PDSCH resources for signaling the UE 400 and PDSCH resources may be blanked inside the pico cell 200.

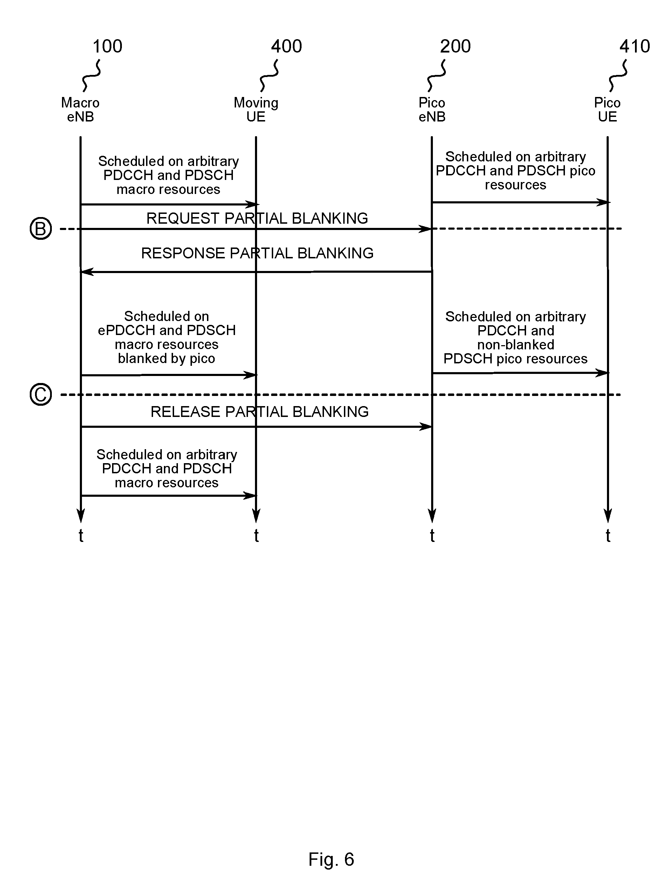

In the following, an embodiment will be further detailed, based on the example scenario of the moving UE 400 presented in Fig. 2. Fig. 6 depicts a message sequence between two base station transceivers in an embodiment. Fig. 6 shows, from the left to the right, a first base station transceiver 100 (e.g. macro eNB), a first mobile transceiver 400 (moving UE), a second base station transceiver 200 (e.g. pico eNB), and a second mobile transceiver 410 (pico UE). The pico UE 410 is assumed to be non-moving and located inside the pico cell's 200 normal coverage area 205. At first, the macro cell 100 schedules the moving UE 400 on arbitrary PDCCH and PDSCH macro resources. Likewise the pico cell 200 schedules the pico UE 410 on arbitrary PDCCH and PDSCH pico resources. In the embodiment illustrated by Fig. 6 the information related to the set of suspended radio resources corresponds to a request from the first base station transceiver 100 (macro eNB) to the second base station transceiver 200 (pico eNB) to suspend the set of radio resources.

The embodiment described in Fig. 6 avoids the handover of the moving UE 400 to the small cell 200 and schedules it using macro resources, which have reduced pico cell 200 interference due to the suspension in the pico cell 200. Compared to the default HO process in case of pico cells 200 with cell range extension 210, there may be no handover to the pico cell 200, if the moving macro UE 400 reaches the extended cell range 210. In embodiments the handover to the small cell 200 may be avoided for the moving UE 400 and it may still be served by the macro cell 100. While the moving UE 400 is located in the extended cell range 210, the received signal of the macro cell 100 is at least as high as the received signal from the pico cell 200.

Therefore the moving UE 400 may still be served on arbitrary macro cell 100 resources without requiring protected resources for as long as it is located on the extended coverage region of the small cell 200. This may change as the moving UE 400 reaches the "normal" or non-extended coverage region 205 of the pico cell 200, i.e. point B. From this point in time, the received signal level from the pico cell 200 may be higher than the received signal level of the macro cell 100. Therefore the moving UE 400 may be scheduled to protected resources.

In this embodiment the control module 16 of the first base station transceiver 100 (macro cell) is further operable to receive information related to an acknowledgment or a rejection on the request from the second base station transceiver 200 (pico eNB) using the interface 12. The control module 16 is operable to initiate a handover of the mobile transceiver 400 to the second base station transceiver 200, when information on the rejection is received. The control module 16 is operable to communicate with the mobile transceiver 400 using the set of suspended radio sources and using the transceiver module 14, when information on the acknowledgment is received. In other words, if the acknowledgement is received no handover of the moving mobile transceiver 400 to the second base station transceiver 200 is initiated. At the second base station transceiver 200 (pico eNB) the control module 26 is further operable to provide information related to an acknowledgment or a rejection on the request to the first base station transceiver 100 (macro eNB) using the interface 22. The control module 26 is operable to determine a decision on the acknowledgement or the rejection based on a radio resource utilization at the second base station transceiver 200 (pico eNB). The request may be rejected if a load condition at the second base station transceiver 200, e.g. the pico cell 200, is high, for example, radio resources of the second base station transceiver may already be utilized to a level at which a suspension of the set of radio resources would lead to quality impairments of pico mobile transceivers 410.

With respect to Fig. 6 once the moving UE 400 reaches position B, the macro eNB 100 sends a "REQUEST PARTIAL BLANKING" message via X2 to pico eNB 200. The interfaces 12 and 22 of the first base station transceiver apparatus 10 and the second base station transceiver apparatus 20 are implemented as X2 interfaces in this embodiment. The "REQUEST PARTIAL BLANKING" message may contain the resources, which should be blanked by the pico cell 200, for example, information related to an amount, a location, a start, or a periodicity may be comprised in the message. In line with Fig. 6 the pico eNB 200 may reply using a "RESPONSE PARTIAL BLANKING" message, which may be either positive (acknowledgment) or negative (rejection). In case of a negative response, the pico eNB 200 could not be able to blank the requested resources, so no protected resources may be provided for the moving UE 400. Therefore the moving UE 400 may perform a handover to the pico eNB 200, otherwise a handover failure may occur, if it was still served by the macro eNB 100. In case of a positive response (acknowledgment) the pico eNB 200 blanks the corresponding resources by using radio resources differing from the set of suspended radio resources and thereby protects resources for the moving UE 400 provided by the macro cell 100. The macro eNB 100 may then use these protected resources to schedule ePDCCH and PDSCH of the moving UE 400.

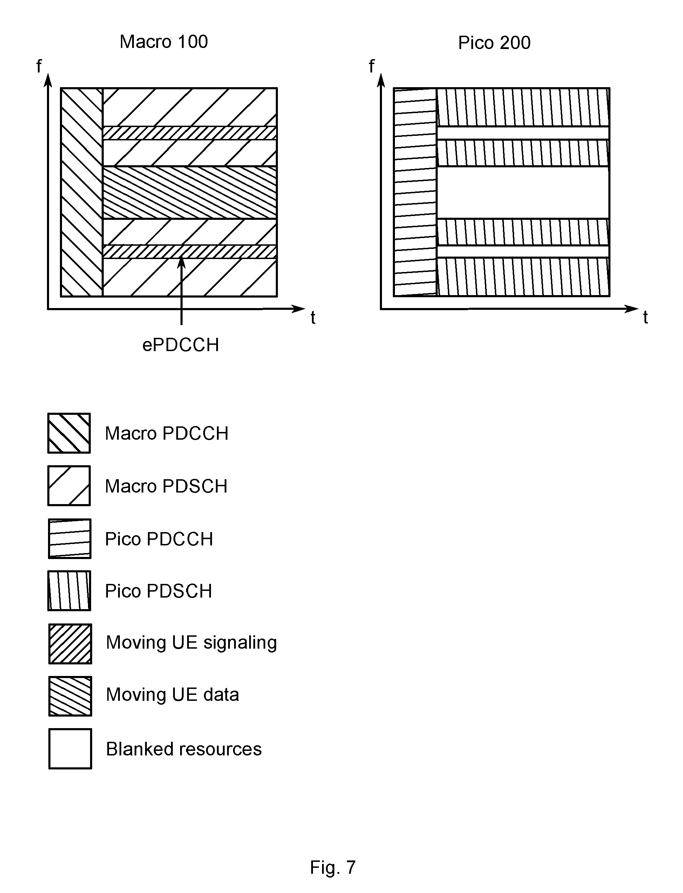

Fig. 7 shows a resource suspension or allocation in an embodiment. Fig. 7 depicts two view charts, one on the left for the macro cell 100 and one on the right for the pico cell 200. Each view chart shows a time-frequency resource plane for one sub-frame. As shown in Fig. 7 the macro cell 100 uses the first symbols in the sub-frame for PDCCH, while signaling PDSCH and data transmission to the UE 400 is carried out in the later symbols in the sub-frame. The signaling to the UE 400 also comprises the ePDCCH. The pico cell 200 uses the first symbols to transmit the pico PDCCH and the later symbols for the pico PDSCH. Moreover, the viewgraph for the pico cell 200 illustrates the blanked resources in the pico cell 200. Embodiments may enable a finer resource suppression or protection compared to the approach shown in Fig. 5. Only a fraction of the resources is blanked, and the blanking may be aligned to the demand of the moving UE 400. In some embodiments only a payload data section of the sub-frame may be used for suspension or blanking. If the moving UE 400 leaves the "normal" cell range 205 of the pico cell 200 and (re)enters the extended cell range 210, the protected resources could be released, because from now on the received signal level from the macro cell 100 may at least be as high as the received signal from the pico cell 200. Therefore the macro eNB 100 may send a "RELEASE PARTIAL BLANKING" message (cf. Fig. 6) to the pico eNB 200 and the pico eNB 200 may release blanked resources.

Macro eNB 100 and pico eNB 200 may then schedule UEs on arbitrary resources. In other words, the control module 16 of the first base station transceiver 100 may be operable to determine information related to a release of a radio resource suspension and the control module 16 may be operable to provide the information related to the release of the radio resource suspension to the second base station transceiver 200, for example, in terms of the above described release message. The control module 26 of the second base station transceiver apparatus 20 may be operable to receive the information related to the release of the radio resource suspension from the first base station transceiver 100, for example, in terms of the above described release message. The control module 26 of the second base station transceiver apparatus 20 may be operable to release the radio resources of the set of suspended radio resources upon reception of the information on the release. In other words, upon reception of the release message the second base station transceiver apparatus 20 may use the radio resources as usual without suspension.

In some embodiments the control module 16 of the first base station transceiver apparatus 10 may be operable to receive information related to a handover request to the second base station transceiver 200 from the mobile transceiver 400 before provision of the information related to the set of suspended radio resources to the second base station transceiver 200. In some embodiments the control module 16 of the first base station transceiver apparatus 10 may be operable to receive information related to a measurement on the signals of the second base station transceiver 200 from the mobile transceiver 400 before provision of the information related to the set of suspended radio resources to the second base station transceiver 200. The information related to the measurement may indicate that a signal quality of the signals from the second base station transceiver 200 received at the mobile transceiver 400 fulfills a predefined criterion, for example, it lies above a threshold, it may exceed any other signal quality level, a measurement event has occurred, etc. The points B and C could be detected by handover events, for example A3 according to the LTE Radio Resource Control specifications, or the points B and C could be detected using periodical UE measurements.

In some embodiments the control module 16 of the first base station transceiver 100 is operable to determine information related to a velocity of the mobile transceiver 400 based on the communication with the mobile transceiver 400. For example, a Doppler spread, a time between handovers of the mobile transceiver 400 may be detected, statistical data or location data could be used to detect that UE 400 is located on a highway, the UE 400 may signal information related to its velocity etc. The control module 16 may be further operable to provide the information related to the set of suspended radio resources, if the information related to the velocity of the mobile transceiver 400 indicates that the velocity of the mobile transceiver 400 lies above a threshold. For example, if the velocity of the mobile transceiver is detected to lie above a velocity threshold, a request for radio resource suspension may be transmitted to the second base station transceiver 200.

Scheduling of retransmissions of the moving UE 400 may also use protected or suspended resources in some embodiments. The retransmissions of a moving UE between points B and C may be scheduled on protected resources. This may be considered when defining/dimensioning the resources which should be blanked by the control module 16 of the first base station transceiver 100. If there are multiple moving UEs, these UEs may share the ePDCCH and in case of dynamic scheduling, for example non semi-persistent, they may also share the PDSCH resources. If all moving UEs have left the normal cell range 205 of the pico cell 200, the blanked ePDCCH resources might be released.

A moving UE 400, which is located in the normal cell range 205 of the pico cell 200 but still served by the macro cell 100, may receive its UpLink/DownLink (UL/DL) Control Information (DCI) on the PDCCH, but it may also receive a Hybrid Automatic Retransmission reQuest (HARQ) positive and negative acknowledgments (ACK/NACK) for uplink transmissions, which are in general carried of the Physical HARQ Indicator CHannel (PHICH). The ePDCCH may provide the possibility to send the UL/DL DCIs on protected resources, but there could be no "ePHICH", which provides the same possibility for the HARQ ACK/NACKs for UL transmissions. In some embodiments the protected ePDCCH resources may be used to signal this information.

That is to say in some embodiments the control module 16 of the first base station transceiver 100 may be operable to use the protected or suspended ePDCCH resources to signal HARQ ACK/NACKs for UL transmissions. For example, this may be done using a New Data Indicator (NDI) flag in UL DCIs, which are sent via the ePDCCH - for example - if NDI is set, this may correspond to an ACK, if NDI is not set, this may correspond to a NACK or vice versa, respectively. If the DCI is not required to signal a new UL allocation, a complete UL DCI may be an overhead, but on one site the number of moving UEs, which do not perform HO to pico cells may be quite low, so this overhead might be manageable. On the other site, the overhead may be smaller by orders than the overhead introduced by the concept presented in Fig. 5.

Embodiments may allow a flexible handling of avoiding handover from macro to pico cells for moving users, without introducing to much restriction to the pico scheduler.

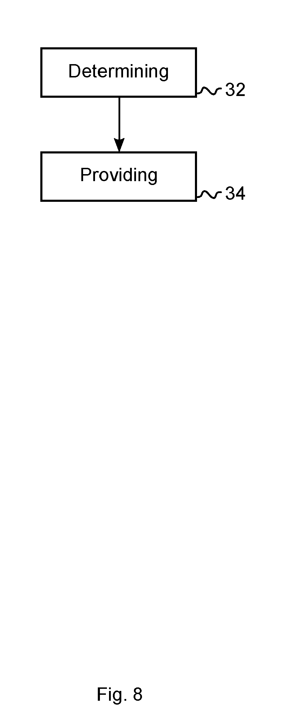

Fig. 8 illustrates a block diagram of a flow chart of an embodiment of a method for a first base station transceiver 100, which is operable to provide information related to suspended radio resources to a second base station transceiver 200. The method comprises determining 32 a set of suspended radio resources to communicate with a mobile transceiver 400 using repetitive radio frames. A radio frame comprises a plurality of sub-frames and a sub-frame comprises a plurality of transmission symbols using time and frequency resources of a sub-frame. The set of suspended radio resources comprises a subset of the time and frequency resources of a sub-frame. The method further comprises providing 34 information related to the set of suspended radio resources to the second base station transceiver 200.

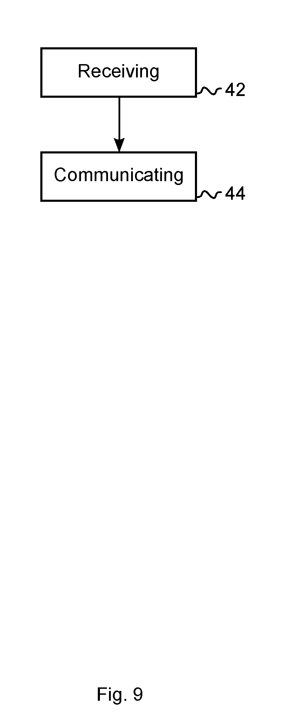

Fig. 9 illustrates a block diagram of a flow chart of an embodiment of a method for a second base station transceiver 200, which is operable to obtain information related to suspended radio resources from a first base station transceiver 100. The method comprises receiving 42 information related to a set of suspended radio resources from the first base station transceiver 100. The method further comprises communicating 44 with the mobile transceiver 400 using repetitive radio frames. A radio frame comprises a plurality of sub-frames and a sub-frame comprises a plurality of transmission symbols using time and frequency resources of a sub-frame and using radio resources differing from the set of suspended radio resources. The set of suspended radio resources comprises a subset of the time and frequency resources of a sub-frame.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", etc., may be provided through the use of dedicated hardware, such as "a controller", "a transmitter", "a receiver", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a first base station transceiver (100), the apparatus (10) being operable to provide information related to suspended radio resources to a second base station transceiver (200), the first base station transceiver apparatus (10) comprising
an interface (12) operable to communicate with the second base station transceiver (200);
a transceiver module (14) operable to communicate with a mobile transceiver (400) using repetitive radio frames, wherein a radio frame comprises a plurality of sub-frames and wherein a sub-frame comprises a plurality of transmission symbols using time and frequency resources of a sub-frame; and
a control module (16) operable to:
control the interface (12) and the transceiver module (14),
determine a set of suspended radio resources to communicate with the mobile transceiver (400), the set of suspended radio resources comprises a subset of the time and frequency resources of a sub-frame; and
provide information related to the set of suspended radio resources to the second base station transceiver (200) using the interface (12).

2. The apparatus (10) of claim 1, wherein information related to the set of suspended radio resources corresponds to a request from the first base station transceiver (100) to the second base station transceiver (200) to suspend the set of radio resources.

3. The apparatus (10) of claim 2, wherein the control module (16) is further operable to receive information related to an acknowledgment or a rejection on the request from the second base station transceiver (200) using the interface (12), and wherein the control module (16) is operable to initiate a handover of the mobile transceiver (400) to the second base station transceiver (200), when information on the rejection is received.

4. The apparatus (10) of claim 2, wherein the control module (16) is further operable to receive information related to an acknowledgment or a rejection on the request from the second base station transceiver (200) using the interface (12), and wherein the control module (16) is operable to communicate with the mobile transceiver (400) using the set of suspended radio sources and using the transceiver module (14), when information on the acknowledgment is received.

5. The apparatus (10) of claim 1, wherein the control module (16) is operable to receive information related to a handover request to the second base station transceiver (200) from the mobile transceiver (400) before provision of the information related to the set of suspended radio resources to the second base station transceiver (200), or wherein the control module (16) is operable to receive information related to a measurement on the signals of the second base station transceiver (200) from the mobile transceiver (400) before provision of the information related to the set of suspended radio resources to the second base station transceiver (200), the information related to the measurement indicating that a signal quality of the signals from the second base station transceiver (200) received at the mobile transceiver (400) fulfills a predefined criterion.

6. The apparatus (10) of claim 1, wherein the first base station transceiver (100) corresponds to a macro cell base station transceiver and wherein the second base station transceiver (200) corresponds to a small cell base station transceiver with a coverage region, which is at least partly surrounded by a coverage region of the first base station transceiver.

7. The apparatus (10) of claim 1, wherein the control module (16) is operable to determine information related to a velocity of the mobile transceiver (400) based on the communication with the mobile transceiver (400), and wherein the control module (16) is operable to provide the information related to the set of suspended radio resources, if the information related to the velocity of the mobile transceiver (400) indicates that the velocity of the mobile transceiver (400) lies above a threshold.

8. The apparatus (10) of claim 1, wherein the control module (16) is operable to determine information related to a release of a radio resource suspension and wherein the control module (16) is operable to provide the information related to the release of the radio resource suspension to the second base station transceiver (200).

9. An apparatus (20) for a second base station transceiver (200), the apparatus (20) being operable to obtain information related to suspended radio resources from a first base station transceiver (100), the second base station transceiver apparatus (20) comprising
an interface (22) operable to communicate with the first base station transceiver (100);
a transceiver module (24) operable to communicate with a mobile transceiver (400) using repetitive radio frames, wherein a radio frame comprises a plurality of sub-frames and wherein a sub-frame comprises a plurality of transmission symbols using time and frequency resources of a sub-frame; and
a control module (26) operable to:
control the interface (22) and the transceiver module (24);
receive information related to the set of suspended radio resources from the first base station transceiver (100) using the interface (22); and
communicate with the mobile transceiver (400) using radio resources differing from the set of suspended radio resources, the set of suspended radio resources comprises a subset of the time and frequency resources of a sub-frame.

10. The apparatus (20) of claim 8, wherein information related to the set of suspended radio resources corresponds to a request from the first base station transceiver (100) to the second base station transceiver (200) to suspend the set of radio resources.

11. The apparatus (20) of claim 8, wherein the control module (26) is further operable to provide information related to an acknowledgment or a rejection on the request to the first base station transceiver (100) using the interface (22), and wherein the control module (26) is operable to determine a decision on the acknowledgement or the rejection based on a radio resource utilization at the second base station transceiver (200).

12. The apparatus (20) of claim 8, wherein the first base station transceiver (100) corresponds to a macro cell base station transceiver and wherein the second base station transceiver (200) corresponds to a small cell base station transceiver with a coverage region, which is at least partly surrounded by a coverage region of the first base station transceiver.

13. A method for a first base station transceiver (100) being operable to provide information related to suspended radio resources to a second base station transceiver (200), the method comprising
determining (32) a set of suspended radio resources to communicate with a mobile transceiver (400) using repetitive radio frames, wherein a radio frame comprises a plurality of sub-frames and wherein a sub-frame comprises a plurality of transmission symbols using time and frequency resources of a sub-frame, the set of suspended radio resources comprises a subset of the time and frequency resources of a sub-frame; and
providing (34) information related to the set of suspended radio resources to the second base station transceiver (200).

14. A method for a second base station transceiver (200) being operable to obtain information related to suspended radio resources from a first base station transceiver (100), the method comprising
receiving (42) information related to a set of suspended radio resources from the first base station transceiver (100); and
communicating (44) with the mobile transceiver (400) using repetitive radio frames, wherein a radio frame comprises a plurality of sub-frames and wherein a sub-frame comprises a plurality of transmission symbols using time and frequency resources of a sub-frame and using radio resources differing from the set of suspended radio resources, the set of suspended radio resources comprises a subset of the time and frequency resources of a sub-frame.

15. A computer program having a program code for performing at least one of the methods of claims 13 or 14, when the computer program is executed on a computer, a processor, or a programmable hardware component.
